# EUROPEAN PATENT SPECIFICATION

(11) **EP 2 159 477 B1**
(45) Date of publication and mention of the grant of the patent: **14.01.2015**
(21) Application number: 09168569.3
(22) Date of filing: 25.08.2009
(51) Int. Cl.: F21S 8/10, F21V 5/00, F21W 101/12, F21W 101/14

(54) **Vehicle lamp using a light guide**
Fahrzeugscheinwerfer mit einem Lichtleiterelement
Feu automobile utilisant un guide de lumière

(30) Priority: 25.08.2008 JP 2008214837; 25.08.2008 JP 2008214838
(43) Date of publication of application: 03.03.2010
(73) Proprietor: KOITO MANUFACTURING CO., LTD., Tokyo (JP)
(72) Inventor: Hirano, Junichi, Shizuoka-shi, Shizuoka (JP); Mochizuki, Miki, Shizuoka-shi, Shizuoka (JP); Natsume, Kazunori, Shizuoka-shi, Shizuoka (JP); Musumiya, Hiroyuki, Shizuoka-shi, Shizuoka (JP)
(74) Representative: Intès, Didier Gérard André

(56) References cited:
- EP-A2- 2 157 363
- DE-A1- 10 207 694
- DE-A1-102005 036 018
- DE-U1-202005 014 267

## Description

### BACKGROUND OF THE INVENTION

### <FIELD OF THE INVENTION>

The present invention relates to a lamp including a light guiding element, and more particularly to a lamp which enhances not only a light utilization efficiency and light output efficiency when the light guiding element and a light source are put in an illuminated state but also a design-related effect of the lamp when it is illuminated.

### <BACKGROUND ART>

In automotive lamps, there is provided a lamp employing a light guiding element as a construction for enhancing a design-related effect of the lamp. For example, Patent Document 1 describes a lamp in which a step-like reflecting plane portion is formed at a back side of a light guiding element, so that light which is allowed to enter the light guiding element from a lower surface thereof to be guided through an interior of the light guiding element is reflected towards the front of the lamp on the reflecting plane portion.
In this lamp, since illumination is produced in which the reflecting plane portion is illuminated brightly, the pattern configuration of the reflecting plane portion when the lamp is viewed from the front can be formed arbitrarily, whereby the lamp can easily be obtained which can form the light illumination pattern which is superior in terms of design.
In the lamp configured in the way described above, a configuration is adopted in which part of the light guiding element is fixedly supported within the lamp housing, the area of the light guiding element where it is fixedly supported is made into a light incident plane from which light is allowed to enter the light guiding element, and light emitted in a light source which is made up of, for example, anLEDelement/s and which is disposed in such a manner as to confront the light incident plane is guided into an interior of the light guiding element from the light incident plane. In Patent Document 1, a lower part of the light guiding element is fixedly supported on the lamp housing, the LED elements are disposed in a position lying therebelow, and a lower end face of the light guiding element is made into the light incident plane.

### <Patent Document 1: JP-A-2007-227356>

Document DE 20 2005 014 267 U describes another example of a known automotive lamp.

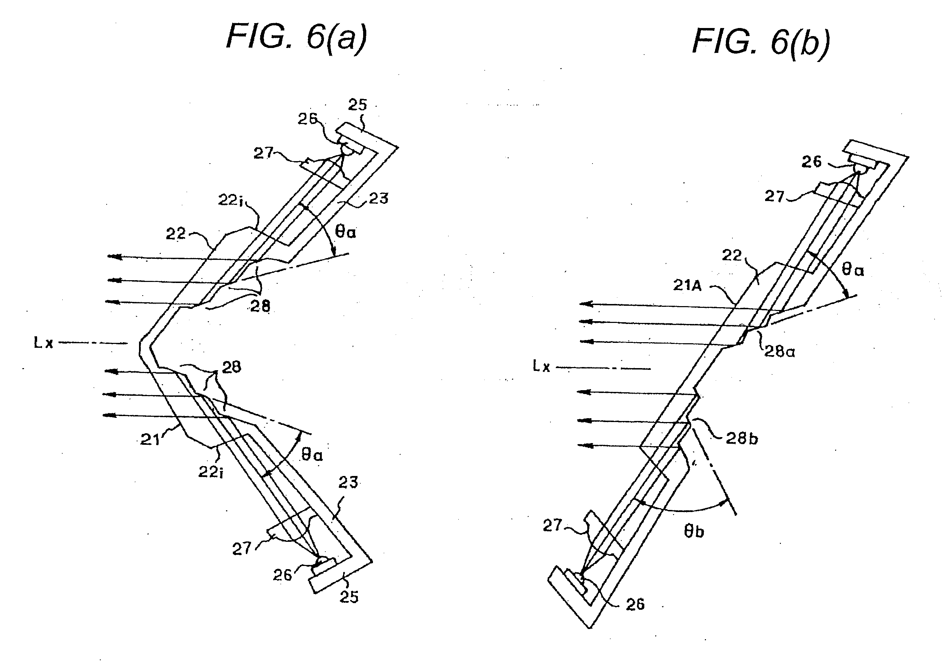

In a lamp having a light guiding element, in order to design an area of the light guiding element to be large and also in order to obtain a high luminous intensity over a wide range of the light guiding element, there may be adopted a configuration in which a plurality of light sources are disposed at a plurality of portions of the light guiding element in such a manner as to confront the light guiding element, so that light is made to enter the interior of the light guiding element from the light sources. As an example, a lamp having a light guiding element and a plurality of light sources is shown in Fig. 6(b), as a related art of the invention (which is not prior art). In the lamp of Fig. 6(b), a planar light guiding element 21A which is disposed within a lamp housing is disposed in such a state that the light guiding element 21A is inclined in a vertical direction relative to an optical axis Lx of a lamp and light outputted from LED elements 26 which are disposed in such a manner as to confront respective upper and lower end faces of the light guiding element is converged by collective lenses 27 so as to be incident on light guiding plane portions 22 of the light guiding element 21 which are formed thick. In addition, stepped (stairs-like) reflecting plane portions 28a, 28b are formed on rear surfaces of the light guiding plane portions 22 of the light guiding element 21A which guide light, so that light that has been guided through the light guiding plane portions 22 are reflected on the reflecting plane portions 28a, 28b so as to output the reflected light towards the front of the lamp along the lamp optical axis Lx. By this configuration, the light from the light sources can be guided and reflected over a wide range of the light guiding element 21A so as to be outputted from the light guiding element 21A, thereby making it possible to obtain the lamp having the high luminous intensity as a whole.

Incidentally, when the light guiding element 21A is disposed in such a manner as to be inclined in the vertical direction relative to the lamp optical axis Lx as described above, that is, when the light guiding plane portions 22 of the light guiding element which guide light are disposed at the required angles relative to the vertical direction, whereby light is made to enter from an upper end face and a lower end face of the light guiding plane portions 22, angles of surfaces of the reflecting plane portions 28a, 28b which reflect light that has been allowed to enter from the respective end faces are designed to be angles at which the light that has so entered is reflected towards a direction which follows the lamp optical axis Lx. Because of this, in the case of this light guiding element 21A, in the reflecting plane portion 28a which reflects light from the upper end face, since the angle of the surface of the reflecting plane portion 28a, that is, the inclination angle of the reflecting surface relative to the light guiding axis which constitutes the light guiding direction of light which is guided through the light guiding plane portion 22 constitutes a small angle θa, the critical conditions of light at the reflecting plane portion 28a can easily be satisfied. However, since the angle of the surface of the light reflecting plane portion 28b which reflects light from the lower end face constitutes a large angle θb, the critical conditions of light at the reflecting plane portion 28b cannot be satisfied, and most of the guided light is transmitted through the reflecting plane portion 28b so as to leak to the outside of the light guiding element 21A. Because of this, the reflection efficiency at the reflecting plane portion 28b is decreased, and the output efficiency of light which is outputted towards the front of the lamp is also decreased. In particular, the luminous intensity of light emitted in the lower area of the light guiding element 21Abecomes lower than the luminous intensity of light emitted in the upper area, whereby not only is the utilization efficiency of light contributing to illumination decreased, but also it becomes difficult to implement illumination with uniform light emission over the whole area of the light guiding element.

Moreover, in a lamp which includes the light guiding element described above, since the light guiding element is made to be fixedly supported directly on the lamp housing at least at part thereof, when light is guided to the light guiding element and the light so guided then illuminates almost the whole surface of the light guiding element, the area which supports the light guiding element is also illuminated. Inthisarea, since the LEDelements are normally covered to be concealed by the extension in such a manner as not to be exposed to the outside, light which is allowed to illuminate the light guiding element in the area where the light guiding element is covered to be concealed is intercepted by the extension, whereby light in this area is made ineffective, thereby decreasing the light utilization efficiency. In addition, when a lamp is attempted to be designed in which a second light source is disposed behind a light guiding element and light emitted in the second light source is transmitted through the light guiding element so as to be outputted to the front of the lamp, in the event that part of the light guiding element is covered to be concealed by an extension, the light emitting area of the second light source is also limited by the extension, the light utilization efficiency of light emitted in the second light source being thereby decreased. Because of this, the light emitting area of the second light source needs to be taken into consideration when limiting the light emitting area of the light guiding element, and it becomes difficult to design the light emitting area of the light guiding element arbitrarily. In particular, it becomes impossible to design the light emitting area of the light guiding element smaller than the opening in the extension.

### SUMMARY OF THE INVENTION

An object of the invention is to provide a lamp which not only enhances a light output efficiency in a light guiding element but also enables light emission with uniform brightness over the whole area of the light guiding element.

It is also an object of the invention to provide a lamp which enhances a light utilization efficiency in a light guiding element and enables an arbitrary design of a light emitting area of the light guiding element.

In accordance with one or more embodiments of the invention, a lamp as defined in claim 1 is provided with a light guiding plane portion, a supporting plane portion, a light source, and an extension. The light guiding plane portion is supported within a lamp housing. The light guiding plane portion includes: a light incident plane provided on at least a part of an end face of the light guiding plane portion and adopted to guide light into an interior of the light guiding plane portion; and a reflecting plane portion provided at a rear side of the light guiding plane portion and adopted to reflect the guided light towards a front of the lamp. The supporting plane portion is light transmissive. The supporting plane portion is provided at least at a part along a circumferential edge of the light guiding plane portion. The supporting plane portion supports the light guiding plane portion in an area which is spaced apart from an inner circumferential surface of the lamp housing. The light source is disposed to be opposed to the light incident plane. An extension has an opening through which the light guiding plane portion is exposed. The extension is adapted to cover and conceal at least the light source in such a manner that the light source is not exposed to the front of the lamp housing.

According to the above structure, since the light guiding plane portion is supported at the supporting plane portion which is provided on part of the light guiding plane portion in such a state that the light guiding plane portion is spaced apart from the inner circumferential portion of the lamp housing and the light guiding plane portion is made to be exposed by the opening provided in the extension, the light guiding plane portion can be restricted to the inside of the opening within the lamp housing, whereby the light guiding plane portion is disposed in such a state that the light guiding plane portion is floating in the air within the lamp housing. Since the light guiding plane portion is disposed within the opening in the extension, light emitted can be outputted from the whole surface of the light guiding plane portion, and the light utilization efficiency is enhanced.
In addition, by the light emitting area on the light guiding plane portion being restricted to be disposed within an arbitrary area within the opening in the extension, the light emitting area can be designed into a light emitting surface of arbitrary design without being restricted by the configuration of the opening in the extension, the specialty and remarkableness of the lamp being thereby enhanced.

In the lamp, the supporting plane portion may be formed integrally with the light guiding plane portion around a full circumference of the light guiding plane portion as a thin portion whose thickness is thinner than a thickness of the light guiding plane portion.

According to the above structure, since the light guiding plane portion can be supported on the lamp housing at the supporting plane portion which is provided around the full circumference of the light guiding plane portion, the supporting strength can be increased for stable support of the light guiding plane portion, whereby the light guiding plane portion is not dislocated even by vibrations produced while the vehicle is driving, thereby making it possible to ensure the illuminated state of the lamp. In addition, since the reflecting plane portion is put in the brightly illuminated state while in the light guiding plane portion, part of light guided is reflected so irregularly that the light guiding plane portion becomes slightly illuminated, the illuminated area on the light guiding plane portion looks as if it were floating in the air within the lamp housing, whereby the design-related effect can be enhanced.

The lamp may include a second light source disposed at a rear side of the light guiding plane portion. Light outputted from the second light source may be transmitted through the light guiding plane portion and outputted to the front of the lamp housing.

In the above structure, since the supporting plane portion has the light transmissive properties, even in the event that the opening area of the extension is designed in an arbitrary fashion, light from the second light source can be outputted towards of the front of he second housing in the whole area of the opening area, and the light guiding plane portion can be illuminated in any arbitrary size and pattern within the opening area of the extension, thereby making it possible to obtain the specialty and remarkableness in the illuminated state of the lamp when it is lit.

Moreover, in accordance with one or more embodiments of the invention, a lamp is provided with a light guiding element and light sources. The light guiding element includes: light incident planes; reflecting plane portions; and light sources for respectively emitting light to the light incident planes. Light entered from the light incident planes into an interior of the light guiding element is reflected on the reflecting plane portions towards a front of the lamp for output. The light sources respectively emit light to the light incident planes. The light guiding element is configured by a combination of a plurality of light guiding plane portions which guide the light that has entered from the light incident planes towards the front of the lamp at different inclined angles.

According to the above structure, since light guided through the plurality of light guiding plane portions which make up the light guiding element is guided in the inclined directions towards the front of the lamp, the angle of the reflecting plane portions which reflect the guided light towards the front of the lamp can be formed into the small angle relative to the guiding direction of light so as to satisfy the critical angle conditions, whereby the lamp can be realized which not only enhances the reflection efficiency at the reflecting plane portions but also illuminates with uniform brightness over the whole area of the light guiding element.

In the lamp, the light guiding plane portions may be confront (or facing) each other in a vertical direction so that the light guiding element has a substantially "V" shaped section projecting towards the front of the lamp.

For example, the light guiding element is made up of the upwardly inclined light guiding plane portion and the downwardly inclined light guiding plane portion so as to form a horizontal ridge on a front surface side thereof, an upper end face and a lower end face of the respective light guiding plane portions are made into the light incident planes, and at least one or more LED elements are disposed horizontally as light sources at each of the light incident planes. As this occurs, the upper and lower light incident planes are made parallel to the ridge, and based on this, the plurality of light sources are preferably disposed in a linear fashion on an imaginary line which extends along the light incident plane.

In addition, the light reflecting plane portion is configured as viewed in a vertical cross section as a linear stepped reflecting surface which is inclined relative to the guiding direction of light and is particularly disposed in a line which extends along the ridge. Light from the LED elements which are disposed on the upper and lower sides of the light guiding element is guided through the respective upper and lower light guiding plane portions and is then reflected on the respective reflecting plane portions with high efficiency for output towards the front of the lamp, thereby making it possible to realize the lamp in which the upper area and the lower area of the light guiding element are illuminated with high luminous intensity and uniform brightness.

In the lamp, the light guiding element may include a thin portion on a peripheral area of the light guiding element and a thick portion on an area surrounded by the thin portion. The thick portion may be configured as the light guiding plane portions. End faces of stepped portions between the thick portion and the thin portion may be configured as the light incident planes. The light guiding element may be supported on a lamp housing at a circumferential edge portion of the thin portion.

According to the above structure, the thick portion and thin portion of the light guiding element are integrally formed of a transparent material so as to realize a simplified configuration, and the supporting strength is enhanced by the light guiding element being fixedly supported on the lamp. In addition, since no light is guided to the thin portion, a state is produced in which only the thick portion or the reflecting plane portions are illuminated, whereby the external appearance of the lamp looks as if the illuminated area were floating in the air, thereby making it possible to enhance the visibility and obtain a design-related effect.

Other aspects and advantages of the invention will be apparent from the following description, the drawings and the claims.

### BRIEF DESCRIPTION OF THE DRAWINGS

Fig. 1 is a front view of a tail combination lamp of an exemplary embodiment.
Fig. 2 is a vertical sectional view taken along the line II-II in Fig. 1.
Fig. 3 is a horizontal sectional view taken along the line III-III in Fig. 3.
Fig. 4 is a schematic exploded perspective view of the exemplary embodiment.
Figs. 5(a) to 5(c) are exemplary front views showing illuminated states of the lamp of the exemplary embodiment.
Fig. 6(a) is a vertical sectional view of a main part of the lamp of the exemplary embodiment.
Fig. 6(b) is a vertical sectional view of a main part of a lamp of a related art.

### DETAILED DESCRIPTION OF THE EXEMPLARY EMBODIMENTS

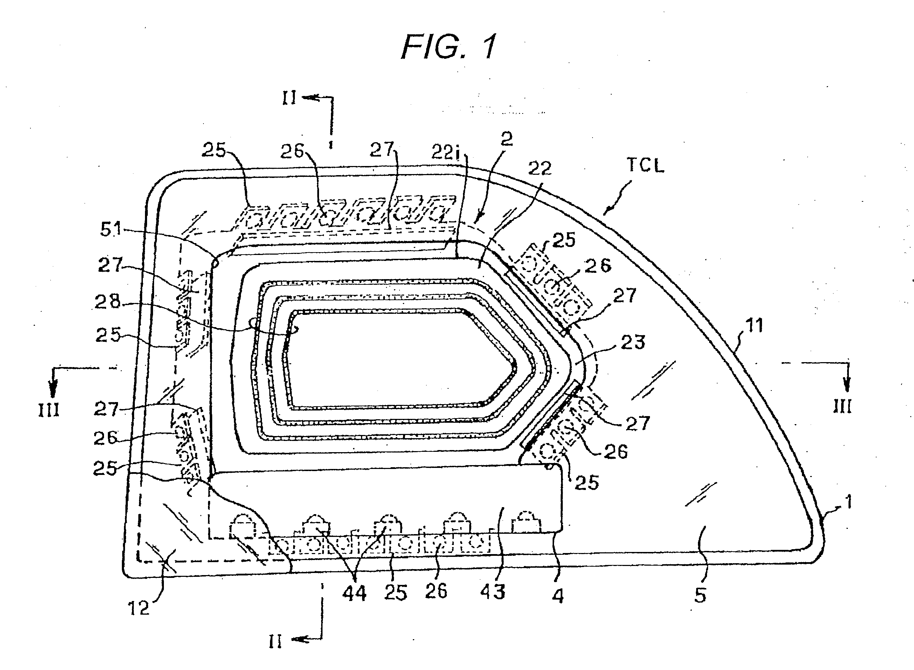

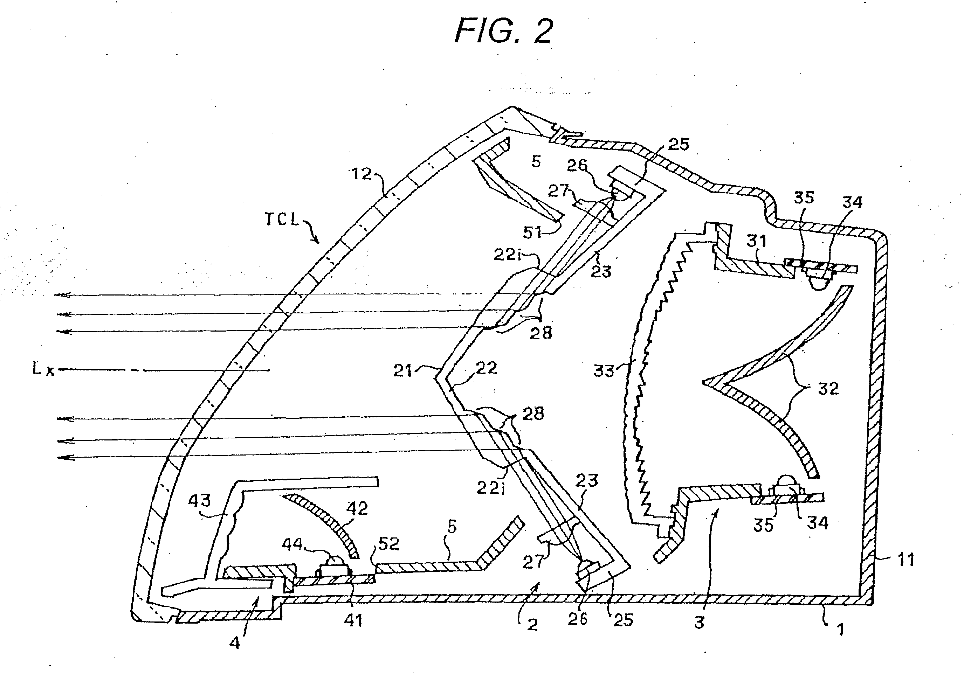

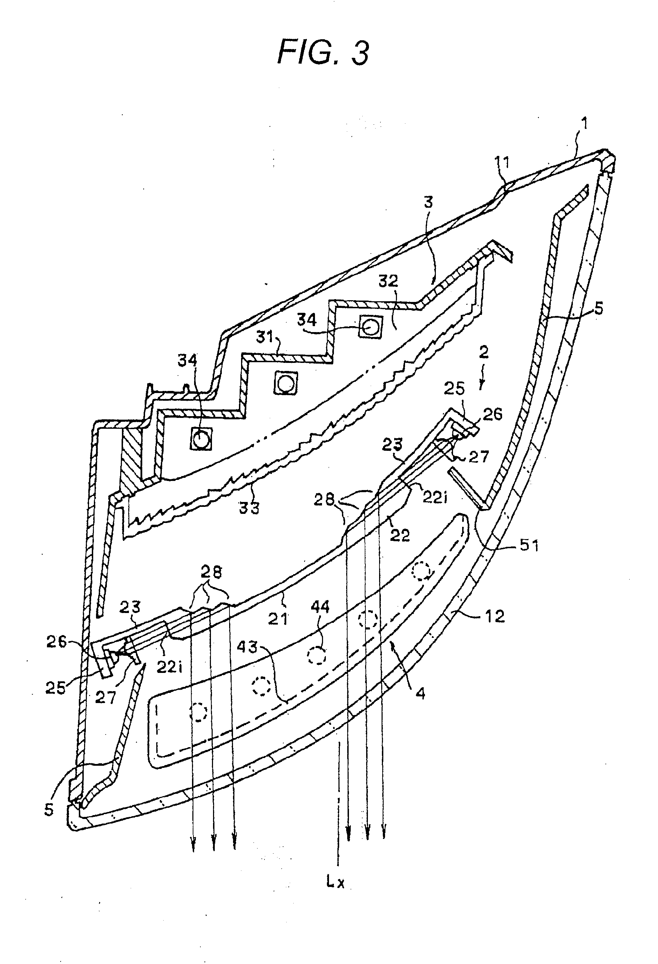

An exemplary embodiment of the invention will be described. Fig. 1 is a front view of the exemplary embodiment in which the invention is applied to a right-hand tail combination lamp TCL of a motor vehicle, Fig. 2 is a vertical sectional view taken along the line II-II in Fig. 1, and Fig. 3 is a horizontal sectional view taken along the line III-III in Fig. 1. In these drawings, a lamp housing is defined by a lamp body 11 which can be fitted to a right-hand side of a rear part of a vehicle body of the motor vehicle and which is formed into a vessel-like shape which is opened at a front side thereof (a rear side of the motor vehicle) and a transparent front cover 12 which is attached to the front opening of the lamp body 11. This front cover 12 is formed into a shape which is inclined towards the rear at an upper portion thereof in such a manner as to match the swelling of the vehicle body and which is curved in a transverse direction in such a manner as to follow a lateral surface of the vehicle body, so as to constitute part of a body configuration of the motor vehicle. In addition, the tail combination lamp TCL of the exemplary embodiment is made up of a tail lamp unit 2, a stop lamp unit 3, and a turn signal lamp unit 4. Note that while the illustration and description of a left-hand tail combination lamp are omitted here, since the left-hand tail combination lamp has a transversely symmetrical configuration with the right-hand tail combination lamp, in the following description, right may only have to be replaced with left when attempting to understand the configuration of the left-hand tail combination lamp.

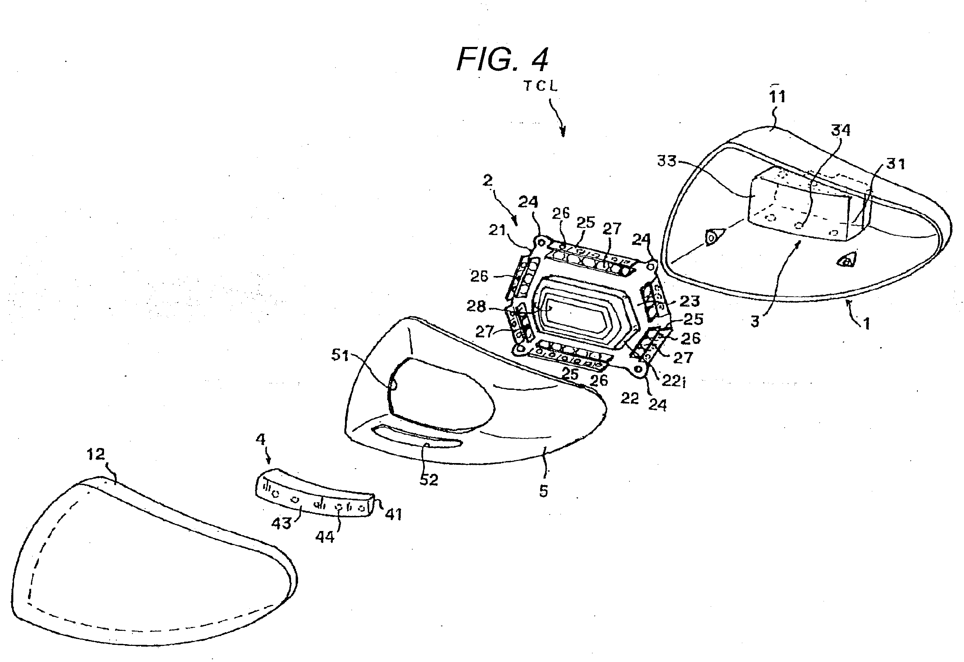

Fig. 4 is a schematic exploded perspective view of the right-hand tail combination lamp TCL. The stop lamp unit 3 is disposed in a rear area within the lamp housing 1, and the tail lamp unit 2 is disposed in front of the stop lamp unit 3. The turn signal lamp unit 4 is disposed in a lower area at a frontmost side of an interior of the lamp housing 1. In addition, an extension 5, which functions as a dummy reflector for covering to conceal a peripheral area within the lamp housing, is disposed and supported in a front side area of the stop lamp unit, and an opening 51 of a required size is provided in a central area of the extension 5, whereby the stop lamp unit 3 and the tail lamp unit 2 are exposed to the front of the tail combination lamp TCL through the opening 51. The turn signal lamp unit 4 is disposed on a lower area at a front side of the extension.

The stop lamp unit 3 is such as to be configured as a second light source of the invention and is made up of an S (stop)-body 31 which has an S-reflector 32 which is made integral therewith and which is formed into a substantially rectangular vessel-like shape when viewed from the front thereof, an S-clear lens 33 which is disposed in a front opening of the S-body 31 and in which required lens steps are formed on a front surface and a rear surface thereof, and a plurality of S-LED elements 34 which are disposed and supported side by side in a transverse direction on an upper surface and a lower surface of the S-body 31 and are each made to emit red light. The S-body 31 is formed into a horizontal step-like configuration on the rear surface thereof, and the S-LED elements 34 are disposed in a step-like fashion in the horizontal direction. The S-reflector 32 is formed to have a vertical sectional shape in which two parabolic reflecting mirrors are disposed in an angular shape which projects forwards, and the S-LED elements 34 which are installed on supporting circuit boards 35 are fixedly supported in focal positions of the respective parabolic reflecting mirrors. The S-LED element 34 is fed via a wiring, not shown in the figure, which is provided on the supporting circuit board 35 in such a manner as to be illuminated when the brakes of the motor vehicle are applied. Red light which is outputted when the S-LED element 34 is illuminated is reflected on the S-reflector 32 so as to be converged into a pencil of light which is substantially parallel to a lamp optical axis Lx, is then formed into a required light distribution pattern when it is transmitted through the S-clear lens 33 by the lens steps formed thereon and is finally transmitted through the front cover 12 for output to the rear of the motor vehicle. Here, the shape and size of the opening 51 in the extension 5 are made equal to or slightly smaller than the shape and size of the S-clear lens 33 of the stop lamp unit 3 which result when it is seen from the front thereof. Because of this, when the stop lamp unit 3 is illuminated, the stop lamp unit 3 exhibits an external shape which looks as if the whole area in the opening 51 in the extension 5 were illuminated.

The tail lamp unit 2 is configured as a light guiding unit having a light guiding element 21 which constitutes a main subject of the invention. The light guiding element 21 is formed into a curved plate-like shape of a light transmissive clear resin and is disposed at a rear side of the extension in such a manner that a central area of the light guiding element 21 is exposed from the opening 51 in the extension 5. The central area that is exposed from the opening 51 in the extension 5 is formed into a thick portion 22 whose thickness dimension is large. However, an area which is made to extend outwards from the whole periphery of the thick portion 22 so as to have an external size larger than the opening 51 is formed as a thin portion 23 whose thickness dimension is smaller than the thick portion 22.
This thin portion 23 is such as to be configured as the supporting plane portion of the invention, and the thick portion 22, that is, the light guiding element 21 is fixedly supported within the lamp housing 1 via the thin portion 23. In this embodiment, the light guiding element 21 is fixedly supported within the lamp body 11 in strong and rigid and stable fashions at supporting pieces 24 which are provided in a plurality of locations along a circumferential edge of the thin portion 23 or, in this embodiment, in four corner positions of the thin portion 23 with screws or the like, not shown in the drawings. In addition, the light guiding element 21 is formed in such a manner that a horizontal sectional shape thereof is curved moderately along a curved shape of the front cover 12, while a vertical sectional shape is bent into a "V" shape substantially at the center of the thick portion 22 in such a manner as to project to the front of the lamp. Namely, the light guiding element 21 is formed into a shape in which a horizontally extending ridge is formed in such a manner as to project to the front substantially at the center of a vertical front surface of the thick portion 22.

In the thin portion 23, LED supporting portions 25, each of which has such a shape that the edge portion of the thin portion 23 is bent to rise in a thickness direction, are formed at six partial edge portions in total along a full circumferential edge portion thereof which confront each other vertically and transversely, here, two partial edge portions which confront each other vertically and four partial edge portions which confront each other transversely, and a plurality of red T (tail)-LED elements 26 are supported on an inner surface of each of the LED supporting portions 25. At each LED supporting portion 25, the T-LED elements 26 are disposed in a linear fashion at equal intervals along an imaginary line extending along an end face 22i of the thick portion 22 with their light emitting planes oriented substantially perpendicular relative to the end face 22i, that is, in the direction in which the light guiding element 21 is bent into the "V" shape and are supported in such a manner as to output light along this direction. In addition, at each LED supporting portion 25, a belt-like collective lens element 27 which has a lens shape in section is integrally fixed in a position which confronts the light emitting surfaces of the T-LED elements 26 as an optical member of the invention.
Since these T-LED elements 26 and collective lens element 27 are disposed further outwards than an opening edge of the opening 51 in the extension 5, they are made not to be exposed to the front by the extension 5.

A detailed configuration of the light guiding element will be described by reference to Figs. 2, 3 and 6(a). A stepped portion is generated along a circumferential edge of the thick portion 22 due to a difference in thickness dimension from the thin portion 23, and the end faces 22i of the thick portion 22 at the stepped portion are configured as light incident planes. In these light incident planes 22i, light incident planes 22i which are disposed in the vertical direction are oriented substantially parallel to the horizontally extending ridge of the light guiding plane portion 22 which is formed into the "V" shape. The T-LED elements which are supported on inner surfaces of the LED supporting portions 25 are made to be fed via wirings, not shown in the drawings, and the respective light emitting planes of the T-LED elements 26 are disposed in such a manner as to confront the light incident planes 22i via the collective lenses 27. The collective lens 27 is formed into a narrow elongated plate-like shape which extends along the light incident plane 22i of the thick portion 22 and is integrated with an inner surface of the thin portion 23 with an adhesive or the like. A portion of the collective lens 27 which confronts the light emitting planes of the T-LED elements 26 is formed into a spherical shape, and red light outputted from the respective T-LED elements 26 is converged into a pencil of substantially parallel light by the collective lens 27 and is then made to enter the thick portion 22 from the light incident plane 22i, so as to be guided through an interior of the thick portion 22.

The thick portion 22 is configured as the light guiding plane portion of the invention and is made up of a combination of a plurality of light guiding plane portions which are inclined in the vertical direction at a required angle relative to the lamp optical axis Lx. Namely, in the exemplary embodiment, as has been described previously, a substantially upper half part of the thick portion 22 which extends from an upper edge portion to a central portion of the thick portion 22 is inclined forwards and downwards, so as to be configured as a light guiding plane portion which guides light that is made to enter from the upper T-LED elements 26 along the inclined direction. In addition, a substantially lower half part of the thick portion 22 which extends from a lower edge portion to the central portion of the thick portion 22 is inclined forwards and upwards, so as to be configured as a light guiding plane portion which guides light that is made to enter from the upper T-LED elements 26 along the inclined direction. These upper and lower half portions are combined integrally to configure the "V" shape. Namely, the light guiding element 21 is made up of a combination of the two light guiding plane portions which guide light towards the front of the lamp at different inclined angles.
In addition, reflecting plane portions 28 are formed on a rear surface of the thick portion 22 of the light guiding element 21, in other words, on respective rear surfaces of the plurality of light guiding plane portions 22 in such a manner as to form a triple-loop pattern configuration in which three loop patterns each having a required pattern configuration as viewed from the front of the lamp, here, a configuration resembling approximately a horizontally elongated oval are disposed concentrically. This reflecting plane portion 28 is formed in such a manner that the rear surface of the light guiding plane portion is formed into a substantially linear stepped configuration (a step-like configuration) as viewed in section, and is designed in such a manner that an angle of a surface of the reflecting plane portion 28, that is, an inclined angle of the reflecting plane portion 28 relative to a light guiding axis thereof which constitutes a traveling direction of light being guided through the light guiding plane portion 22 becomes a predetermined angle θa at which when part of light that is being guided through the interior of the light guiding plane portion 28 is projected on to the reflecting plane portion 28, the light can be reflected towards the front of the lamp.
Further, since the upper and lower light guiding plane portions 22 are symmetry with respect to the lamp optical axis Lx, the surface angles θa of the respective reflecting plane portions 28 are set to be substantially the same. In addition, in the exemplary embodiment, although not shown in the drawings, the reflecting plane portion 28 has a large number of minute spherical steps which project slightly towards the rear in a spherical fashion, so as to obtain a required illumination angle by light reflected on the reflecting plane portion 28 being first converged at a slight angle and being thereafter diffused to be directed to the front of the lamp.

The turn signal lamp unit 4 has a narrow elongated, curved TS (turn signal)-body 41 which has integrally a TS-reflector 42 which has a parabolic sectional shape in the vertical direction and which is elongated in the horizontal direction, and a plurality of amber TS-LED elements 44 are installed in the TS-body 41 in positions lying directly below a reflecting plane of the TS-reflector 42. The TS-body 41 is disposed in such a manner as to be inserted into an opening 52 which is provided in a lower area of the extension 5.
In addition, a transparent TS-clear lens 43 is disposed on a front surface side of the TS-body 41 in such a manner as to horizontally extend along a front edge portion of the extension 5, and required lens steps are formed on a rear surface of the TS-clear lens 43. The TS-LED elements 44 are made to be fed via the TS-body 41 in such a manner as to be illuminated in a flashing fashion when a traveling direction of the motor vehicle is indicated. Amber light which is outputted when each TS-LED element 44 is illuminated is reflected on the TS-reflector 42 so as to be converted approximately into a pencil of parallel light, is then formed into a required light distribution pattern by the lens steps when it is transmitted through the TS-clear lens 43 and is finally transmitted through the front cover 12 for output to the rear of the motor vehicle.

In the tail combination lamp TCL that is configured as has been described heretofore, when the tail combination lamp TCL is illuminated as the tail lamp when the vehicle is driving at night, the T-LED elements 26 of the tail lamp unit 2 are illuminated. Red light outputted from the respective T-LED elements 26 is converged by the collective lens elements 27 and is made to enter the thick portion 22, that is, the light guiding plane portions 22 from the end faces of the thick portion 22 of the light guiding element 21, that is, the incident planes 22i so as to be guided through the light guiding plane portions 22. As this occurs, light from the T-LED elements 26 which are disposed on the left-and right-hand sides of the light guiding element 21 is guided through the light guiding plane portions in the horizontal direction, while light from the T-LED elements 26 which are disposed on the upper and lower sides of the light guiding element 21 is guided through the light guiding plane portions 22 in the vertical direction. In particular, as to the vertical direction, since the light guiding plane portions 22 are formed in such a manner as to be bent into the "V" shape, light from the upper T-LED elements 26 is guided through the light guiding plane portion 22 obliquely downwards towards the front, while light from the lower T-LED elements 26 is guided through the light guiding plane portion 22 obliquely upwards towards the front. In addition, part of the light which is being guided through the light guiding plane portions 22 is reflected on the reflecting plane portions 28 towards the front of the light guiding element 21, so as to be directed in the direction which follows the lamp optical axis Lx.
Then, the light is outputted to the front from front surfaces of the light guiding plane portions 22, further passes through the opening 51 in the extension 5 and is finally transmitted through the front cover 12 for output from the tail combination lamp TCL.

Consequently, when looking at the illuminated state of the tail combination lamp TCL from the front thereof when the tail lamp unit 2 is illuminated, the light guiding element 21 exhibits an external appearance in which the light guiding element 21 is illuminated red with high luminous intensity at the reflecting plane portions 28, while the other area of the light guiding element 21 is little illuminated or illuminated slightly reddened with low luminous intensity.

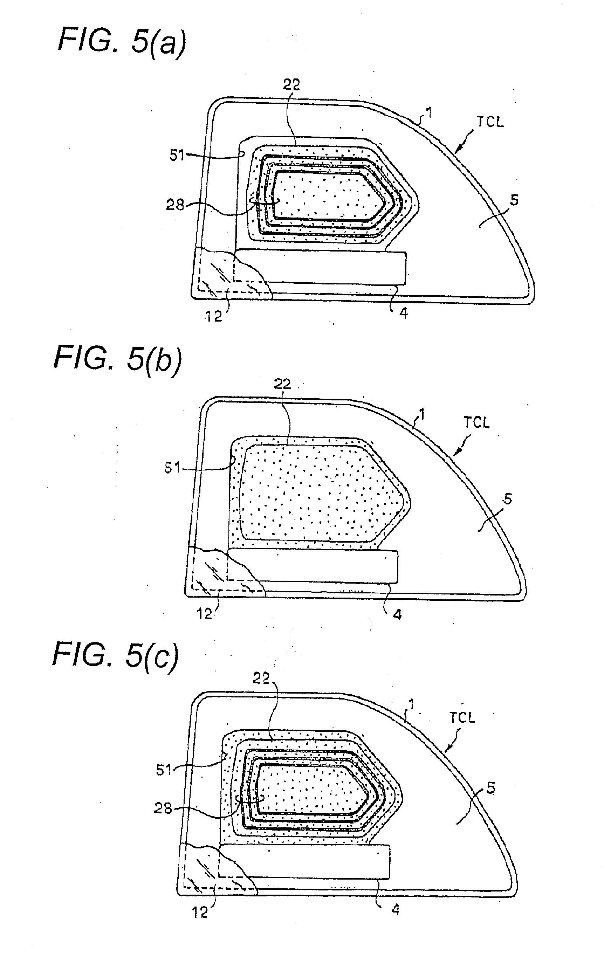

In the exemplary embodiment, since the reflecting plane portions 28 are made to form the triple-loop pattern, when the tail lamp unit 2 is illuminated, as is shown schematically in Fig. 5(a), the tail combination lamp TCL assumes an external appearance in which it is illuminated in the triple-loop pattern. As this occurs, since part of light which is reflected irregularly on part of the light guiding plane portions 22 is outputted to the front from the light guiding plane portions 22, the whole of the light guiding plane portions 22 is illuminated in a dark red color. Note that although not illustrated in the drawing, in reality, part of stray light reaching the thin portion 23 from the light guiding plane portions 22 is irregularly reflected on an inner circumferential area of the thin portion which lies adjacent to the light guiding plane portions 22 for output to the front, this area is also made to look illuminated in the dark red color with low luminous intensity. In other words, the light guiding plane portions 22 of the light guiding element 21 which are exposed in the opening 51 in the extension 5 are illuminated in the dark red color to such an extent that the illuminated state can be visualized, while although the thin portion 23 surrounding the light guiding plane portions 22 is illuminated, the visibility thereof is low, based on which only the areas of the light guiding plane portions 22 which are backed with the reflecting plane portions 28 are illuminated red with high luminous intensity. Consequently, when looking at the whole of the tail combination lamp TCL, an external appearance is produced in which the tail combination lamp TCL is illuminated in such a state that the highly bright red triple-loop pattern were floating in the air within the low bright red area within the opening 51 which constitutes a central area of the extension 5 which covers a circumferential edge portion of the lamp housing 1, whereby the design-related effect of the tail combination lamp TCL when the tail lamp is illuminated is enhanced. Namely, there occurs no such state that the illuminated area is limited by the extension 5, and hence, the light utilization efficiency can be enhanced, while the tail combination lamp TCL can be illuminated in an arbitrary pattern in an arbitrary area without being limited by the shape of the opening 51 in the extension.

Here, when looking at a state in which the guided light is reflected on the reflecting plane portions 28 of the light guiding element 21, light outputted from the left- and right-hand T-LED elements 26 and guided in the horizontal direction in the light guiding plane portions 22 is reflected in the horizontal direction at the reflecting plane portions 28. However, since the light is reflected in such a state that the light is diffused at slight angles in the horizontal direction by the minute spherical steps on the reflecting plane portions 28, the horizontal illumination angle required for tail lamps can be satisfied. In addition, light outputted from the upper and lower T-LED elements 26 and guided in the vertical direction in the light guiding plane portions 22 is reflected at the reflecting plane portions 28 in the direction which follows the lamp optical axis Lx. However, since, at the same time as this is occurring, the light is reflected in such a state that the light is diffused at slight angles in the vertical direction at the minute spherical steps of the reflecting plane portions 28, the vertical illumination angle required for tail lamps can also be satisfied. Further, when looking at the vertical reflection of guided light at the reflecting plane portions 28, although each reflecting plane portion 28 is formed to have an angle at which light made to enter the light guiding plane portion 22 from the upper or lower T-LED elements 26 so as to be guided in the light guiding plane portion 22 is reflected in the direction which follows the lamp optical axis Lx, in the exemplary embodiment, since the light guiding plane portion 22 is inclined so as to form part of the "V" shape which projects to the front, in the upper light guiding plane portion 22, the light guiding direction is directed forwards and downwards, and the inclined angle (surface angle θa) of the reflecting plane portion 28 relative to the light guiding axis is decreased. Similarly, in the lower light guiding plane portion 22, since the light guiding direction is directed forwards and upwards, the inclined angle (surface angle θa) of the reflecting plane portion 28 relative to the light guiding axis is decreased at the same angle. By this configuration, the reflection angle of light which is outputted from the upper and lower T-LED elements 26, is guided through the light guiding plane portions 22 and is reflected at the reflecting plane portions 28 in the direction which follows the lamp optical axis Lx becomes equal to or smaller than the critical angle or the light is reflected at an angle equal to or smaller than the critical angle, the reflection efficiency being thereby enhanced. That is, as compared with the light guiding element 21A of the related art shown in Fig. 6(b), the reflection efficiency at the reflecting plane portion 28 is enhanced, so that the light utilization efficiency of the whole lamp being thereby improved. In addition,by thisconfiguration,the reflection efficiency at the reflecting plane portions over the whole area of the light guiding element 21 which includes the upper area and the lower area of the light guiding plane portion 22 becomes uniform, whereby a uniformly bright illuminated state is produced over the whole area of the light guiding element 21. Incidentally, in the event that the lower half light guiding plane portion 22 is not directed forwards and upwards, the inclined angle of the reflecting plane portion 28 for directing light reflected at the reflecting plane portion 28 in the direction which follows the lam optical axis Lx becomes large, the critical angle at which light is totally reflected cannot be satisfied, whereby there is produced a light transmission at the reflecting plane portion 28, and the reflection efficiency of light is decreased, the light utilization efficiency of the whole lamp being thereby decreased.

In the tail combination lamp TCL of the exemplary embodiment, when the brakes of the motor vehicle are applied with the tail lamp unit 2 being not illuminated as during the daytime, the S-LED elements 34 of the stop lamp unit 3 as the second light source of the invention are illuminated.
Red light outputted from the respective S-LED elements 34 is reflected at the S-reflector 32 to the front along the lamp optical axis Lx in a converged state, is transmitted through the S-clear lens 33 to thereby be formed into a required light distribution pattern, is then passed through the opening 51 in the extension 5 after having been transmitted through the light guiding element 21 of the tail lamp unit 2, and further is outputted to the front of the lamp through the front cover 12. As this occurs, since the tail lamp unit 2 is not illuminated, there occurs no such situation that the triple-loop pattern in the light guiding element 21 is illuminated. Consequently, when looking at the whole of the tail combination lamp TCL, as is shown in Fig. 5(b), the whole area within the opening 51 in the central area of the extension 5 which covers the circumferential edge portion of the lamp housing 1 becomes illuminated red with high luminous intensity, whereby the tail combination lamp TCL functions as the stop lamp. Namely, the illuminated area of the stop lamp unit 3 can be regulated by the opening 51 in the extension, which means that almost all the light emitted in the stop lamp unit 3 is outputted, the light utilization efficiency being thereby enhanced.

As has been described previously, when the brakes of the motor vehicle are applied with the tail lamp unit 2 being illuminated as during the night-time, the illumination of the stop lamp unit 3 as the second light source is added to the illumination of the tail lamp unit 2. Namely, when the stop lamp unit 3 is illuminated whereby the S-clear lens 33 is put in the illuminated state, after having been transmitted through the light guiding element 21 of the tail lamp unit 2 which is in the illuminated state, the light passes through the opening 51 in the extension 5 and further passes through the front cover 12 for output to the front of the lamp. As this occurs, the light of the stop lamp unit 3 is transmitted through not only the thick portion 22 as the light guiding plane portion of the light guiding element 21 but also the thin portion 23 as the supporting plane portion. Consequently, when looking at the whole of the tail combination lamp TCL, there is produced an illuminated state in which the illuminated state in which the whole area within the opening 51 in the central area of the extension 5 which covers the circumferential portion of the lamp housing 1 becomes illuminated red with high luminous intensity, as is shown in Fig. 5 (c) is superposed on the illuminated state in which the triple-loop pattern by the tail lamp unit 2 is illuminated, as is shown in Fig. 5 (a). In reality, since the luminous intensity of the tail lamp unit 2 is not so high that almost all the illuminated state characterized by the triple-loop pattern shown in Fig. 5 (a) is substituted by the illumination at the stop lamp unit 3 when the brakes are applied during the night-time, and by the luminous intensities of both the lamp units 2, 3 being superposed on each other, the tail combination lamp TCL functions as the extremely bright stop lamp. As this occurs, needless to say, the external appearance is exhibited in which the triple-loop pattern is illuminated.

In addition, although illustration is omitted, in the tail combination lamp TCL of the exemplary embodiment, the TS-LED elements 44 of the turn signal lamp unit are illuminated when the traveling direction of the motor vehicle is changed. Amber light outputted from the individual TS-LED elements 44 is reflected at the TS-reflector 42 to the front along the lamp optical axis Lx in a converged state, is transmitted through the TS-clear lens 43 to thereby be formed in the required light distribution pattern, and further is transmitted through the front cover 12 to be outputted to the front of the lamp. By this series of actions being completed, the whole surface of the TS-clear lens 43 becomes illuminated in an amber color, whereby the tail combination lamp TCL functions as the turn signal lamp. Since this turn signal lamp unit 4 is disposed at the front side of the extension 5, the size of the opening 51 in the extension 5 and the illuminated states of the tail lamp unit 2 and the stop lamp unit 3 are affected in no case by the turn signal lamp unit 4.

In the exemplary embodiment, while the T-LED elements 26 and the collective lenses 27 of the tail lamp unit 2 are covered to be concealed by the extension 5, since light emitted in the T-LED elements 26 only has to be prevented from being outputted directly to the front of the lamp, at least the T-LED elements 26 may be covered and concealed by the extension 5, and the collective lenses 27 do not necessarily have to be covered to be concealed by the extension 5, and hence, there may be adopted a configuration in which the collective lens 27 are exposed from the opening 51.

While in the exemplary embodiment, the light guiding element is formed to have the "V" shaped vertical section, the light guiding element may also be formed to have a "V" shaped horizontal section. In particular, in a lamp in which part thereof is extended to a side surface portion of the motor vehicle to have a horizontal sectional shape close to an "L" shape or which has a so-called turn-round portion, in the event that the light guiding element is configured in such a manner as to extend to the turn-round portion, by the thick portion of the light guiding element being formed into a "V" shape which is oriented horizontally, the reflection efficiency at the reflecting plane portions in the horizontal area of the light guiding element can be enhanced in the same way as described with respect to the vertical direction in Embodiment 1.

With the light guiding element according to the invention, in addition to forming the vertical or horizontal section thereof into the "V" shape, the angle of surface of the reflecting plane portions can be designed small in the event that light which is guided through the light guiding plane portions of the light guiding element is guided to the front of the lamp at the inclined angle, and the guided light can be made to satisfy the critical angle conditions when it is reflected on the reflecting plane portions. Consequently, the formation of a section into the "V" shape is not limited to the two directions such as the horizontal and vertical directions, and hence, by the light guiding element being made to constitute part of a polyhedron by a combination of a plurality of plane portions which are inclined in every direction of the lamp axis, light that enters the light guiding element from the plurality of LED elements which are disposed on the periphery thereof can be reflected in the direction of the lamp axis with high efficiency at the reflecting plane portions.

In addition, the invention does not necessarily relate to the light guiding element which is configured in such a manner that the supporting plane portion is disposed along the full circumference of the light guiding plane portion, and hence, the invention can equally be applied to a configuration in which the supporting plane portion is provided at least partially along the circumferential direction of the light guiding element and the light guiding element is fixedly supported within the lamp housing at this supporting plane portion. As this occurs, the light sources, that is, the T-LED elements 26 are disposed in the area where the supporting plane portion 23 is formed, the T-LED elements 26 can also be disposed in such a manner as to confront even the circumferential end faces of the light guiding plane portion 22 where there exists no supporting plane portion 23, and as this occurs, the T-LED elements 26 are disposed and supported separately from the light guiding element 21.
In addition, the pattern configuration of the reflecting plane portions 28 which are formed on the light guiding plane portions 22 are not limited to the pattern described in the exemplary embodiment.

The lamp of the invention is not applied to a tail lamp unit disposed in a tail combination lamp as in the exemplary embodiment but can be applied to other lamp units. In addition, the second light source according to the invention is not necessarily limited to the stop lamp unit. The invention can be applied to any lamp in which with a main lamp which is configured to include a light guiding element being in an illuminated state, when a separate lamp (a second light source) from the main lamp is illuminated, light emitted therein is transmitted through the light guiding element so as to be outputted to the front of the lamp. In addition, the invention is not limited to the tail combination lamp of the exemplary embodiment but can equally be applied to a lamp which is made up of a plurality of lamp units including a lamp unit which employs a light guiding element.

In addition, the invention is not necessarily configured as the light guiding unit in which the LED elements are disposed around the full circumference of the light guiding element, and hence, the invention can equally be applied to any configuration in which LED elements or light sources are disposed on at least both sides the light guiding unit across the light guiding element.

### [Description of Reference Numerals and Signs]

1 lamp housing; 2 tail lamp unit; 3 stop lamp unit (second light source); 4 turn signal lamp unit; 11 lamp body; 12 front cover; 21 light guiding element; 22 thick portion (light guiding plane portion); 23 thin portion (supporting plane portion); 25 LED supporting portion; 26 T-LED elements; 27 collective lens; 28 reflecting plane portion; TCL tail combination lamp.

## Claims

1. A lamp **characterized in that** it comprises:
a light guiding plane portion (22) supported within a lamp housing (1) and including:
a light incident plane (22i) provided on at least a part of an end face of the light guiding plane portion (22) and adopted to guide light into an interior of the light guiding plane portion (22); and
a reflecting plane portion (28) provided at a rear side of the light guiding plane portion (22) and adopted to reflect the guided light towards a front of the lamp;
a supporting plane portion (23) which is light transmissive, and provided at least at a part along a circumferential edge of the light guiding plane portion (22), wherein the supporting plane portion (23) supports the light guiding plane portion (22) in an area which is spaced apart from an inner circumferential surface of the lamp housing (1) ;
a light source (26) disposed to be opposed to the light incident plane (22i); and
an extension (5) having an opening (51) through which the light guiding plane portion (22) is exposed and adapted to cover and conceal at least the light source (26) in such a manner that the light source (26) is not exposed to the front of the lamp housing (1),
**characterized in that** the supporting plane portion (23) is positioned between the light source (26) and the light incident plane (22i), and
the supporting plane portion (23) is formed integrally with the light guiding plane portion (22), and a thickness of the supporting plane portion (23) is thinner than a thickness of the light guiding plane portion (22).

2. The lamp according to Claim 1, wherein the supporting plane portion (23) is formed around a full circumference of the light guiding plane portion (22).

3. The lamp according to Claim 1 or 2, further comprising:
a second light source (3) disposed at a rear side of the light guiding plane portion (22), wherein light outputted from the second light source (3) is transmitted through the light guiding plane portion (22) and outputted to the front of the lamp housing (1).

4. The lamp according to any one of claims 1 to 3,
wherein said light guiding plane portion comprises a first light guiding plane portion (22) and a second light guiding plane portion (22), each including a light incident plane (22i) and a reflecting plane portion (28),
wherein said supporting plane portion comprises a first supporting plane portion (23) and a second supporting plane portion (23), the first supporting plane portion (23) being provided at the circumferential edge of the first light guiding plane portion (22) and the second supporting plane portion (23) being provided at the circumferential edge of the second light guiding plane portion (22),
wherein said light source comprises a first light source (26) and a second light source (26), the first light source (26) being disposed to be opposed to the light incident plane (22i) of the first light guiding plane portion (22) and the second light source (26) being disposed to be opposed to the light incident plane (22i) of the second light guiding plane portion (22),
wherein a first light guiding axis which constitutes a traveling direction of the light guided through the first light guiding plane portion (22) is different from a second light guiding axis which constitutes a traveling direction of the light guided through the second light guiding plane portion (22).

5. The lamp according to Claim 4, wherein the first and second light guiding plane portions (22) are facing each other in a vertical direction so that a light guiding element (21) including the first and second light guiding plane portions (22) has a substantially "V" shaped cross section projecting towards the front of the lamp.

6. The lamp according to any one of claims 1 to 3, further comprising a lens (27), wherein a light emitting plane of the light source (26) is disposed in such a manner as to face the light incident plane (22i) via the lens (27), and the lens (27) is disposed further outwards than an opening edge of the opening (51) of the extension (5).

## Patentansprüche

1. Leuchte, **dadurch gekennzeichnet, dass** sie umfasst:
einen lichtleitenden Ebenenabschnitt (22), der innerhalb eines Leuchtengehäuses (1) gestützt wird und enthält:
eine Lichteinfallsebene (22i), die auf mindestens einem Teil einer Endfläche des lichtleitenden Ebenenabschnitts (22) angeordnet ist und dazu ausgelegt ist, Licht in das Innere des lichtleitenden Ebenenabschnitts (22) zu leiten, und
einen reflektierenden Ebenenabschnitt (28), der auf einer Rückseite des lichtleitenden Ebenenabschnitts (22) angeordnet ist und dazu ausgelegt ist, das geleitete Licht in Richtung einer Vorderseite der Leuchte zu reflektieren,
einen Stützebenenabschnitt (23), der lichtdurchlässig ist und mindestens an einem Teil entlang eines Umfangsrandes des lichtleitenden Ebenenabschnitts (22) angeordnet ist, wobei der Stützebenenabschnitt (23) den lichtleitenden Ebenenabschnitt (22) in einem Bereich stützt, der von einer Innenumfangsfläche des Leuchtengehäuses (1) beabstandet ist,
eine Lichtquelle (26), die so angeordnet ist, dass sie der Lichteinfallsebene (22i) gegenüberliegt, und
eine Verlängerung (5), die eine Öffnung (51) aufweist, durch die hindurch der lichtleitende Ebenenabschnitt (22) frei liegt, und die dazu ausgelegt ist, mindestens die Lichtquelle (26) in einer solchen Weise zu bedecken und zu verbergen, dass die Lichtquelle (26) nicht zur Vorderseite des Leuchtengehäuses (1) hin frei liegt,
**dadurch gekennzeichnet,**
**dass** der Stützebenenabschnitt (23) zwischen der Lichtquelle (26) und der Lichteinfallsebene (22i) positioniert ist, und
**dass** der Stützebenenabschnitt (23) integral mit dem lichtleitenden Ebenenabschnitt (22) ausgebildet ist und eine Dicke des Stützebenenabschnitts (23) dünner ist als eine Dicke des lichtleitenden Ebenenabschnitts (22).

2. Leuchte nach Anspruch 1, wobei der Stützebenenabschnitt (23) um einen vollen Umfang des lichtleitenden Ebenenabschnitts (22) herum ausgebildet ist.

3. Leuchte nach Anspruch 1 oder 2, ferner umfassend:
eine zweite Lichtquelle (3), die auf einer Rückseite des lichtleitenden Ebenenabschnitts (22) angeordnet ist, wobei Licht, das von der zweiten Lichtquelle (3) ausgesendet wird, durch den lichtleitenden Ebenenabschnitt (22) übertragen und zur Vorderseite des Leuchtengehäuses (1) ausgegeben wird.

4. Leuchte nach einem der Ansprüche 1 bis 3,
wobei der lichtleitende Ebenenabschnitt einen ersten lichtleitenden Ebenenabschnitt (22) und einen zweiten lichtleitenden Ebenenabschnitt (22) umfasst, die jeweils eine Lichteinfallsebene (22i) und einen reflektierenden Ebenenabschnitt (28) enthalten,
wobei der Stützebenenabschnitt einen ersten Stützebenenabschnitt (23) und einen zweiten Stützebenenabschnitt (23) umfasst, wobei der erste Stützebenenabschnitt (23) am Umfangsrand des ersten lichtleitenden Ebenenabschnitts (22) angeordnet ist und der zweite Stützebenenabschnitt (23) am Umfangsrand des zweiten lichtleitenden Ebenenabschnitts (22) angeordnet ist,
wobei die Lichtquelle eine erste Lichtquelle (26) und eine zweite Lichtquelle (26) umfasst, wobei die erste Lichtquelle (26) so angeordnet ist, dass sie der Lichteinfallsebene (22i) des ersten lichtleitenden Ebenenabschnitts (22) gegenüberliegt, und die zweite Lichtquelle (26) so angeordnet ist, dass sie der Lichteinfallsebene (22i) des zweiten lichtleitenden Ebenenabschnitts (22) gegenüberliegt,
wobei eine erste Lichtleitachse, die eine Ausbreitungsrichtung des Lichts darstellt, das durch den ersten lichtleitenden Ebenenabschnitt (22) geleitet wird, eine andere ist als eine zweite Lichtleitachse, die eine Ausbreitungsrichtung des Lichts darstellt, das durch den zweiten lichtleitenden Ebenenabschnitt (22) geleitet wird.

5. Leuchte nach Anspruch 4, wobei der erste und der zweite lichtleitende Ebenenabschnitt (22) einander in einer vertikalen Richtung zugewandt sind, so dass ein Lichtleitelement (21), das den ersten und den zweiten lichtleitenden Ebenenabschnitt (22) enthält, einen im Wesentlichen "V"-förmigen Querschnitt hat, der in Richtung der Vorderseite der Leuchte hervorragt.

6. Leuchte nach einem der Ansprüche 1 bis 3, die des Weiteren eine Linse (27) umfasst, wobei eine Lichtaussendeebene der Lichtquelle (26) in einer solchen Weise angeordnet ist, dass sie der Lichteinfallsebene (22i) über die Linse (27) zugewandt ist, und die Linse (27) weiter auswärts angeordnet ist als ein Öffnungsrand der Öffnung (51) der Verlängerung (5).

## Revendications

1. Lampe **caractérisée en ce qu'**elle comprend :
une partie plane de guidage de lumière (22) supportée à l'intérieur d'un boîtier de lampe (1) et incluant :
un plan d'incidence de lumière (22i) prévu sur au moins une partie d'une face d'extrémité de la partie plane de guidage de lumière (22) et adapté à guider la lumière à l'intérieur de la partie plane de guidage de lumière (22) ; et
une partie plane de réflexion (28) prévue du côté arrière de la partie plane de guidage de lumière (22) et adaptée à réfléchir la lumière guidée vers l'avant de la lampe ;
une partie plane de support (23) laissant passer la lumière et prévue au moins au niveau d'une partie située le long du bord circonférentiel de la partie plane de guidage de lumière (22), dans laquelle la partie plane de support (23) supporte la partie plane de guidage de lumière (22) dans une zone qui est séparée de la surface circonférentielle intérieure du boîtier de lampe (1) ;
une source de lumière (26) disposée de manière à être opposée au plan d'incidence de lumière (22i) ; et
une extension (5) comportant une ouverture (51) à travers laquelle est exposée la partie plane de guidage de lumière (22) et adaptée à recouvrir et à masquer au moins la source de lumière (26) de telle manière que la source de lumière (26) n'est pas exposée vers l'avant du boîtier de lampe (1),
**caractérisée en ce que** la partie plane de support (23) est positionnée entre la source de lumière (26) et le plan d'incidence de lumière (22i), et
la partie plane de support (23) est formée d'un seul tenant avec la partie plane de guidage de lumière (22), et l'épaisseur de la partie plane de support (23) est inférieure à l'épaisseur de la partie plane de guidage de lumière (22).

2. Lampe selon la revendication 1, dans laquelle la partie plane de support (23) est formée autour de la circonférence complète de la partie plane de guidage de lumière (22).

3. Lampe selon la revendication 1 ou 2, comprenant en outre :
une seconde source de lumière (3) disposée du côté arrière de la partie plane de guidage de lumière (22), la lumière fournie en sortie par la seconde source de lumière (3) étant transmise à travers la partie plane de guidage de lumière (22) et fournie en sortie vers l'avant du boîtier de lampe (1).

4. Lampe selon l'une quelconque des revendications 1 à 3, dans laquelle ladite partie plane de guidage de lumière comprend une première partie plane de guidage de lumière (22) et une seconde partie plane de guidage de lumière (22), incluant chacune un plan d'incidence de lumière (22i) et une partie plane de réflexion (28),
dans laquelle ladite partie plane de support comprend une première partie plane de support (23) et une seconde partie plane de support (23), la première partie plane de support (23) étant prévue au niveau du bord circonférentiel de la première partie plane de guidage de lumière (22) et la seconde partie plane de support (23) étant prévue au niveau du bord circonférentiel de la seconde partie plane de guidage de lumière (22),
dans laquelle ladite source de lumière comprend une première source de lumière (26) et une seconde source de lumière (26), la première source de lumière (26) étant disposée de manière à être opposée au plan d'incidence de lumière (22i) de la première partie plane de guidage de lumière (22) et la seconde source de lumière (26) étant disposée de manière à être opposée au plan d'incidence de lumière (22i) de la seconde partie plane de guidage de lumière (22),
dans laquelle un premier axe de guidage de lumière qui constitue la direction du parcours de la lumière guidée à travers la première partie plane de guidage de lumière (22) est différent d'un second axe de guidage de lumière qui constitue la direction de parcours de la lumière guidée à travers la seconde partie plane de guidage de lumière (22).

5. Lampe selon la revendication 4, dans laquelle les première et seconde parties planes de guidage de lumière (22) se font face dans une direction verticale de sorte qu'un élément de guidage de lumière (21) incluant les première et seconde parties planes de guidage de lumière (22) possède une section sensiblement en forme de « V » se projetant vers l'avant de la lampe.

6. Lampe selon l'une quelconque des revendications 1 à 3, comprenant en outre une lentille (27), le plan d'émission de lumière de la source de lumière (26) étant disposé de telle manière à faire face au plan d'incidence de lumière (22i) par l'intermédiaire de la lentille (27) et la lentille (27) étant disposée plus à l'extérieur que le bord d'ouverture de l'ouverture (51) de l'extension (5).
